(19) Europäisches Patentamt
European Patent Office
Office européen des brevets

(11) **EP 0 660 567 B1**

(12) **EUROPÄISCHE PATENTSCHRIFT**

(45) Veröffentlichungstag und Bekanntmachung des Hinweises auf die Patenterteilung:
**23.02.2005 Patentblatt 2005/08**

(51) Int Cl.⁷: **H04L 12/28**, H04B 7/185

(21) Anmeldenummer: **94203676.5**

(22) Anmeldetag: **19.12.1994**

(54) **Lokales Netzwerk**

Local network

Réseau local

(84) Benannte Vertragsstaaten:
**DE FR GB**

(30) Priorität: **22.12.1993 DE 4343839**

(43) Veröffentlichungstag der Anmeldung:
**28.06.1995 Patentblatt 1995/26**

(73) Patentinhaber:
• **Philips Intellectual Property & Standards GmbH 20099 Hamburg (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder: **Du, Yonggang, Dr. Ing., c/o Philips D-20097 Hamburg (DE)**

(74) Vertreter: **Volmer, Georg, Dipl.-Ing. et al Philips Intellectual Property & Standards GmbH, Postfach 50 04 42 52088 Aachen (DE)**

(56) Entgegenhaltungen:
**EP-A- 0 444 207          GB-A- 2 162 722**

• **IEE PROCEEDINGS SECTIONS A A I, Bd. 130, Nr. 4, Juni 1983, UK, Seiten 343-349, XP002005856 H. MINE ET AL.: "Delay analysis of a satellite channel reservation system with variable frame format"**
• **A.S. TANENBAUM: "Computer Networks" 1988 , PRENTICE HALL INTERNATIONAL INC , USA XP002005857 * Seite 175 - Seite 182 ***

**Beschreibung**

Die Erfindung bezieht sich auf ein lokales Netzwerk mit mehreren Netzwerkschnittstellen, die jeweils mit einer Station gekoppelt sind und die untereinander zum Austausch von Daten vorgesehen sind.

Ein lokales Netzwerk ist aus der Veröffentlichung "Ohne Chips nichts los - Standard-Chips für ATM-Systeme sind im Kommen" von Bernd Reder, Elektronik 1/1993, Seiten 66 bis 75, bekannt. In diesem Übersichtsaufsatz wird der gegenwärtige Stand bei der Entwicklung von integrierten Schaltungen für Anwendungen in lokalen Netzwerken diskutiert, die nach dem asynchronen Transfermodus (ATM) arbeiten. Jede Station ist dabei über eine Netzwerkschnittstelle mit den Ringanschlüssen des lokalen Netzwerkes verbunden. Zur Steuerung des ATM-Zellstroms werden in der Netzwerkschnittstelle Koppelvorrichtungen (switches) verwendet.

Bei Verwendung eines asynchronen Transfermodus in einem System werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bytes (z.B. 53 Bytes) aufweist. Jede Zelle besteht aus einem Kopffeld mit einer Länge von beispielsweise 5 Byte und einem Informationsfeld, in dem die Nutzinformation untergebracht ist, mit einer Länge von beispielsweise 48 Byte. In einem solchen Kopffeld sind Wegekennungen, Daten zur Fehlererkennung und Daten für Steuerinformationen vorhanden. Unter Wegekennungen sind Bündelkennungen und Verbindungskennungen zu verstehen. Die Verbindungskennung, die auch als VCI (Virtual Channel Identifier) bezeichnet wird, enthält die Angabe über den Bestimmungsort der Zelle in dem System. Zur Übermittlung einer Zelle wird anhand der Verbindungskennung ein virtueller Kanal zur Verfügung gestellt. In der Regel wird ein VCI nach Erreichen einer Vermittlungsstelle jeweils verändert. Ein Bündel mehrerer virtueller Kanäle wird als virtueller Pfad bezeichnet. Ein virtueller Pfad wird durch die Bündelkennung gekennzeichnet. Ein solcher virtueller Pfad wird VPI (Virtual Path Identifier) genannt. Zellen sind aufeinanderfolgend bestimmten Zeitabschnitten zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitabschnitt Leerzellen übertragen, d.h. Zellen ohne Nutzinformation. Zellen, die eine Nutzinformation beinhalten, werden als Nutzzellen bezeichnet.

Für die Übertragung von Daten oder den Austausch zwischen den Netzwerkschnittstellen des lokalen Netzwerkes kann eine leitungsgebundene oder eine drahtlose Übertragungsart gewählt werden. Die Übertragung von Daten über Funkübertragungswege ist beispielsweise dann vorteilhaft, wenn die Station mobil sein muß. Unter einer solchen Station ist z.B. ein schnurloses Telefon, ein tragbarer Personal-Computer oder auch ein drahtloser Kopfhörer zu verstehen.

Aus dem Dokument "IEE PROCEEDINGS SECTIONS A a I, Bd. 130, Nr. 4, Juni 1983, UK, Seiten 343-349, XP002005856 H. MINE ET AL.: 'Delay analysis of a satellite channel reservation system with variable frame format' ist ein Satelliten-Kanal-Reservierungs-System bekannt, welches zur Übertragung von Paketdaten zwischen Satellit und der jeweiligen Bodenstation ein variables Rahmenformat anwendet. Hierbei speichert jede Bodenstation seine Pakete in einer Warteschlange. Der Satellit weist den Bodenstationen Zeitschlitze zu. Dabei wird nur dann ein einziger Zeitschlitz einer Bodenstation zugewiesen, wenn ein Paket in der zugeordneten Warteschlange gespeichert ist. Die Anzahl der Zeitschlitze in einem Rahmen richtet sich damit nach der Anzahl der Warteschlangen mit einem Paket in den Bodenstationen.

Der Erfindung liegt die Aufgabe zugrunde, ein flexibles lokales Netzwerk zu schaffen.

Die Aufgabe wird durch ein lokales Netzwerk nach den Merkmalen des Anspruchs 1 gelöst.

Bei dem erfindungsgemäßen lokalen Netzwerk kann die Übertragung zwischen den einzelnen Netzwerkschnittstellen beispielsweise über Datenpakete erfolgen. Auch ist die Übertagung mittels Signalen eines hierarchischen Systems möglich. Jede Netzwerkschnittstelle meldet der Funkstation beispielsweise in periodischen Abständen die Größe der zu übertragenden Informationsmenge (Lastinformation). Hierbei kann z.B. die Meldung erfolgen, das zur Übertragung der Daten ein Signal mit einer Bitrate von 2 Mbit/s erforderlich ist. Bei einer Paketübertragung wird z.B. die Anzahl und Größe der Pakete mitgeteilt. In der Funkstation wird dann ermittelt, welche Funkkanalkapazität zur Verfügung gestellt werden muß. So kann zwischen zwei Netzwerkschnittstellen beispielsweise ein oder mehrere Funkkanäle mit einer Gesamtkapazität von 34 Mbit/s und ein oder mehrere Funkkanäle zwischen anderen Netzwerkschnittstellen von 2 Mbit/s zugewiesen werden. Hierbei kann ein Frequenz- oder ein Zeitmultiplexverfahren angewendet werden. Denkbar ist auch die Verwendung des CDMA-Verfahren (Code Division Multiplex Access).

Die Übertragung zwischen den einzelnen Netzwerkschnittstellen und der Funkstation kann entweder über eine separate Trägerfrequenz oder durch Übertragung in einem Zeitschlitz bei Verwendung des Zeitmultiplexverfahrens erfolgen.

Der Austausch der Daten zwischen den Netzwerkschnittstellen kann über drahtgebundene Wege oder Funkübertragungswege erfolgen. Eine Erhöhung der Flexibilität ergibt sich bei einer Übertragung von Daten über Funkübertragungswege.

Ein drahtloses lokales Netzwerk ist insbesondere in privaten Haushalten geeignet, um Telefon, Bildschirm Lautsprecher Audio-Tuner, TV-Tuner, CD-Player, Personal-Computer und andere Geräte miteinander zu koppeln. Hierbei kann auf einfache Art jeweils auch eine Veränderung des Aufstellungsortes erfolgen (Flexibilität).

Wenn in dem lokalen Netzwerk Pakete zwischen den einzelnen Netzwerkschnittstellen übertragen werden, ist eine Ausgangspufferanordnung in einer Netzwerkschnittstelle zur Zwischenspeicherung der zu sendenden Pakete vorgesehen. Die Funkstation erhält dann von den Netzwerkschnittstellen Lastinformationen über den Inhalt jeder Ausgangspufferanordnung.

Ein Spezialfall der Paketübertragung ist der asynchrone Transfermodus (ATM), bei dem Pakete oder Blöcke fester Länge als Zellen übertragen werden. Aufgrund der festen Länge der Zellen ergibt sich eine einfachere Verarbeitung. Eine Netzwerkschnittstelle sendet und empfängt Zellen und sendet Lastinformationen über die Anzahl der zu einer anderen Netzwerkschnittstelle zu übertragenden Zellen. Diese Lastinformation wird dabei aufgrund der geringen Informationsmenge in der Regel nicht in Zellen nach dem asynchronen Transfermodus übertragen.

Die Lastverteilung kann durch die Funkstation auf einfache Weise gesteuert werden, wenn die Funkkanäle Zeitschlitze eines Zeitmultiplexrahmens sind. Hierbei ist die Funkstation zur Zuweisung von Zeitschlitzen eines Zeitmultiplexrahmens für jede Netzwerkschnittstelle in Abhängigkeit von der Anzahl der zu einer anderen Netzwerkschnittstelle zu übertragenen Zellen in der zugeordneten Ausgangspufferanordnung vorgesehen. Einer Netzwerkschnittstelle mit einer großen Last werden z.B. drei Zeitschlitze und einer anderen mit einer geringeren Last ein Zeitschlitz von der Funkstation zugewiesen. Während eines Zeitschlitzes können mehrere Zellen übertragen werden.

Die Detektierung der in der Ausgangspufferanordnung enthaltenen Zellen und die Aussendung von Zellen während eines zugewiesenen Zeitschlitzes erfolgt auf folgende Art. Eine Netzwerkschnittstelle enthält eine Steuervorrichtung zur Steuerung der Ausgangspufferanordnung und zur Bestimmung der Anzahl der Zellen in der Ausgangspufferanordnung, eine Funksendevorrichtung zur Sendung der von der Steuervorrichtung enthaltenen Lastinformationen an die Funkstation und eine Funkempfangsvorrichtung zur Weiterleitung der von der Funkstation empfangenen Daten an die Steuervorrichtung. Die Steuervorrichtung ist zur Erzeugung eines Freigabebefehls für die Funksendevorrichtung vorgesehen, so daß nur während eines zugewiesenen Zeitschlitzes die Funksendevorrichtung zur Sendung von von der Ausgangspufferanordnung abgegebenen Zellen dient.

Innerhalb einer Netzwerkschnittstelle leitet eine Koppelvorrichtung den Zellenstrom. Diese ist zur Weiterleitung der von der Funkempfangsvorrichtung empfangenen Zellen, einer zugeordneten Station abgegebenen Zellen oder der Steuervorrichtung abgegebenen Zellen zu der zugeordneten Station, der Steuervorrichtung und/oder der Funksendevorrichtung vorgesehen.

Eine Ausführungsform der Koppelvorrichtung ist durch folgende Merkmale gekennzeichnet: Die Koppelvorrichtung ist über Zubringerleitungen mit einem Ausgang der Station, einem Ausgang der Steuervorrichtung und der Funkempfangsvorrichtung und über Abnehmerleitungen mit einem Eingang der Station, einem Eingang der Steuervorrichtung und der Funksendevorrichtung gekoppelt. Jede Abnehmerleitung ist mit einem Sendepuffer der Ausgangspufferanordnung gekoppelt. Jedes Sendepuffer ist über jeweils ein Zellenfilter mit einer Zubringerleitung gekoppelt. Ein Zellenfilter ist zur Überprüfung der Adresse einer Zelle und zur Weiterleitung von Zellen mit korrekter Adresse an den zugeordneten Sendepuffer vorgesehen. Eine Koppelsteuerung dient zum Austausch von Meldungen über die an ein Sendepuffer weitergeleiteten Zellen mit einem Zellenfilter und wenigstens zur Freigabe der Sendepuffer.

Die Funkstation weist jeder Schnittstelle bestimmte Zeitkanäle zu. Eine Netzwerkschnittstelle kann z.B. drei Zeitschlitze und eine andere Netzwerkschnittstelle mit weniger Zellen in der Ausgangspufferanordnung ein Zeitschlitz pro Zeitmultiplexrahmen zugewiesen bekommen. Eine Basissteueranordnung in der Funkstation berechnet aus den empfangenen Lastinformationen die Anzahl der Zeitschlitze pro Zeitmultiplexrahmen für eine Netzwerschnittstelle. Hierbei ist die Basissteueranordnung

- zum Empfang der Anzahl $Z_k$ der in einer Ausgangspufferanordnung einer Netzwerkschnittstelle zwischengespeicherten, für die Zuführung zu einer anderen Netzwerkschnittstelle vorgesehenen Zellen,
- zur Berechnung der Anzahl $S_k$ von Zeitschlitzen eines Zeitmultiplexrahmens für eine Netzwerkschnittstelle mit den Formeln:

$$S_k = INT(A_k\ M)$$

$$A_k = \begin{cases} \dfrac{Z_k}{\sum\limits_{i=1}^{n} Z_i} & \text{wenn } k=1 \\[2em] \left(1 - \sum\limits_{i=1}^{k-1} B_i\right) \dfrac{Z_k}{\sum\limits_{i=k}^{n} Z_i} & \text{sonst} \end{cases}$$

$$B_i = \frac{S_i}{M}\ ,$$

wobei INT eine Rundungsoperation, M die Anzahl der Zeitschlitze eines Zeitmultiplexrahmens, n die Anzahl der Netzwerkschnittstellen, k=1,2,...,n und i=1,2,...,n-1 ist, und

- zur Verteilung der Zeitschlitze für jede Netzwerkschnittstelle vorgesehen.

Zunächst berechnet die Basissteueranordnung für eine erste Netzwerkschnittstelle einen Anteil $A_1$. Dieser Anteil $A_1$ wird mit der Anzahl M der Zeitschlitze eines Zeitmultiplexrahmens multipliziert. Das auf- oder abgerundete Multiplikationsergebnis (durch die Operation INT) gibt die Anzahl $S_1$ von Zeitschlitzen des Zeitmultiplexrahmens für die erste Netzwerkschnittstelle an. Danach wird ein korrigierter Anteil $B_1$ berechnet. Auf die gleiche Weise wird nach den oben angegebenen Formeln die Anzahl der Zeitschlitze für die anderen Netzwerkschnittstellen ermittelt.

Die Verteilung der Zeitschlitze im Zeitmultiplexrahmen ist beliebig. Beispielsweise können die Zeitschlitze für eine Netzwerkschnittstelle hintereinander oder weitgehend gleichmäßig im Zeitmultiplexrahmen verteilt sein.

In einer Weiterbildung der Erfindung ist vorgesehen, daß die Funkstation jeweils als Brückenglied zur Weiterleitung der von einer Netzwerkschnittstelle empfangenen Daten zu einer anderen Netzwerkschnittstelle vorgesehen ist. Hierbei können ähnliche Übertragungsverfahren und Schaltungen wie beim GSM-System (Global Sytem for Mobile Communication) eingesetzt werden. Eine Übersicht über dieses Mobilfunksystem findet sich in der EP-A2-0 544 457.

Die Erfindung bezieht sich auch auf eine Netzwerkschnittstelle und eine Funkstation für ein lokales Netzwerk. Diese Netzwerkschnittstelle ist mit einer Station gekoppelt, dient zum Austausch von Daten über Funkübertragungsstrecken mit benachbarten Netzwerkschnittstellen und einer Funkstation und ist zur Sendung von Lastinformationen an die Funkstation und zum Empfang einer Information über wenigstens einen zu verwendenden Funkkanal für den Datenaustausch mit den benachbarten Netzwerkschnittstellen von der Funkstation vorgesehen. Die Funkstation für ein lokales Netzwerk mit mehreren, jeweils mit einer Station gekoppelten Netzwerkschnittstellen zum Austausch von Daten über Funkübertragungswege ist zum Austausch von Daten mit den Netzwerkschnittstellen über Funkübertragungswege, zum Empfang von Lastinformationen der Netzwerkschnittstellen und in Abhängigkeit der Lastinformationen zur Sendung der Verteilung von Funkkanälen für den Datenaustausch zwischen den Netzwerkschnittstellen vorgesehen.

Ausführungsbeispiele der Erfindung werden nachstehend anhand der Figuren näher erläutert. Es zeigen:

Fig. 1    ein Übersichtsschaltbild eines lokalen, nach dem asynchronen Transfermodus arbeitenden Netzwerkes, bei dem ein Datenaustausch über Funkübertragungswege erfolgt,

Fig. 2    ein Blockschaltbild einer in dem lokalen Netzwerk verwendeten Netzwerkschnittstelle mit einer zugeordneten Station,

Fig.3    eine schematisch in einer Netzwerkschnittstelle verwendete Koppelvorrichtung,

Fig. 4    ein Blockschaltbild einer in dem lokalen Netzwerk verwendeten Funkstation,

Fig. 5    einen schematisch skizzierten Zeitmultiplexrahmen zur Erläuterung der Funkübertragung von Daten zwischen den Netzwerkschnittstellen und

Fig. 6    ein Übersichtsbild über eine weitere Ausführungsform eines lokalen Netzwerkes.

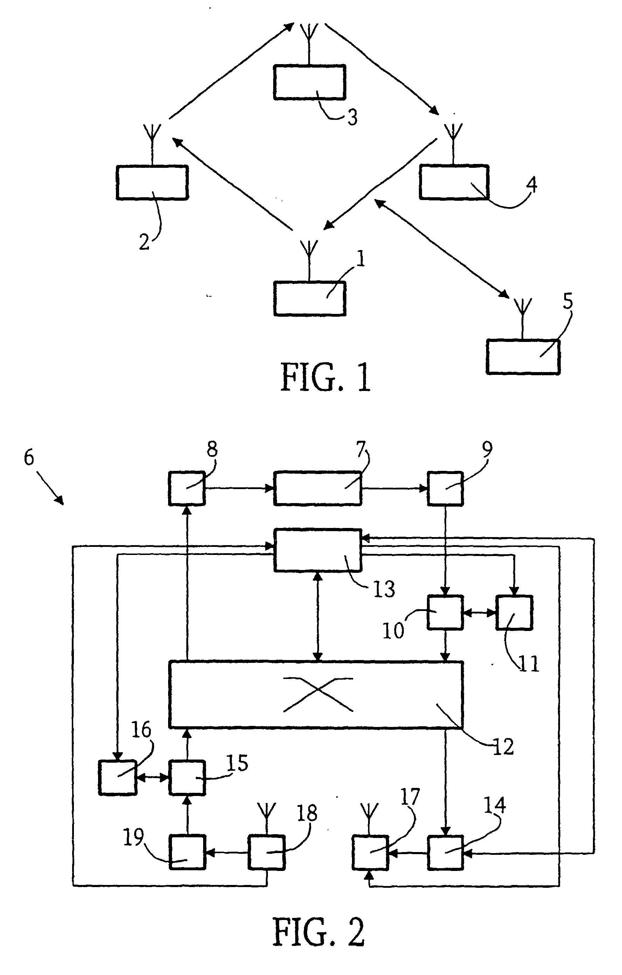

In Fig. 1 ist ein Übersichtsbild eines Ausführungsbeispiels eines lokalen Netzwerkes mit vier Vorrichtungen 1 bis 4 dargestellt, die jeweils aus einer Netzwerkschnittstelle und einer Station bestehen. Eine Station kann beispielsweise ein Telefon, ein Bildfernsprecher, ein Personal-Computer, ein Fernsehgerät, ein Audio-Tuner sein. Die Nachrichten bzw. die Informationen, die von den Stationen oder den Netzwerkschnittstellen einer Vorrichtung 1 bis 4 stammen, werden nach dem asynchronen Transfermodus mittels Zellen über Funkübertragungswege zwischen den einzelnen Netzwerkschnittstellen übertragen. Die Netzwerkschnittstelle der Vorrichtung 1 sendet die Zellen zur Netzwerkschnittstelle der Vorrichtung 2, die Netzwerkschnittstelle der Vorrichtung 2 sendet die Zellen zur Netzwerkschnittstelle der Vorrichtung 3, die Netzwerkschnittstelle der Vorrichtung 3 sendet die Zellen zur Netzwerkschnittstelle der Vorrichtung 4 und die Netzwerkschnittstelle der Vorrichtung 4 sendet die Zellen zur Netzwerkschnittstelle der Vorrichtung 1 (Ringverkehr).

Eine Zelle enthält ein Kopffeld mit beispielsweise 5 Byte und ein Informationsfeld mit beispielsweise 48 Byte. Die im Kopffeld der Zelle enthaltenen Informationen dienen insbesondere zur Adressierung und zur Durchführung von Vermittlungsfunktionen.

Die Funkübertragung der Zellen zwischen den einzelnen Netzwerkschnittstellen wird nach einem Zeitmultiplexverfahren durchgeführt. Für jede Ringverbindung sind ein oder mehrere Zeitschlitze eines Zeitmultiplexrahmens vorhanden. In einen Zeitschlitz können mehrere Zellen eingefügt werden. Die Verteilung der Zeitschlitze steuert eine Funkstation 5, die ebenfalls über Funkübertragungswege mit den Netzwerkschnittstellen der Vorrichtungen 1 bis 4 kommuniziert. Hierbei werden aufgrund der geringeren Informationsmenge als bei dem Datenaustausch über die Ringverbindungen keine Zellen verwendet. Der Ringverkehr wird dabei über einen ersten Träger mit einer ersten Trägerfrequenz und der Verkehr mit den Netzwerkschnittstellen und der Funkstation 5 über einen zweiten Träger mit einer zweiten Trägerfrequenz abgewickelt. Es ist auch möglich einen weiteren Zeitschlitz für den Verkehr der Funkstation 5 mit den Netzwerkschnittstellen zur Verfügung zu stellen.

Eine Netzwerkschnittstelle 6 und eine zugeordnete Station 7 sind in der Fig. 2 detaillierter dargestellt. Die Station 7 ist jeweils mit Pufferspeichern 8 und 9 der Netzwerkschnittstelle 6 verbunden. Der Pufferspeicher 9 liefert Zellen von der Station 7 zu einer ersten Auswerteschaltung 10, die mit einer Wegetabelle 11 gekoppelt ist und die das Kopffeld einer ankommenden Zelle auswertet. Adresseninformationen im Kopffeld der Zelle werden als Speicheradresse für die mit der ersten Auswerteschaltung 10 verbundene Wegetabelle 11 verwendet. Die unter der Speicheradresse abgelegte Information in der Wegetabelle 11 wird von der ersten Auswerteschaltung 10 zur weiteren Verarbeitung und Weiterleitung der Zelle genutzt. Beispielsweise kann die erste Auswerteschaltung 10 die Zelle kopieren und mit einer neuen Adresse versehen.

Die erste Auswerteschaltung 10 ist an eine Koppelvorrichtung 12 angeschlossen, die den Zellenstrom in der Netzwerkschnittstelle 6 leitet. Weiter ist die Koppelvorrichtung 12 mit dem Pufferspeicher 8, einer Steuervorrichtung 13, eine Ausgangspufferanordnung 14 und einer zweiten Auswerteschaltung 15 gekoppelt. Über Verbindungen zwischen Steuervorrichtung 13 und Koppelvorrichtung 12 werden Zellen und Steuerinformationen übertragen. Die Steuervorrichtung 13, die als Mikroprozessor ausgebildet sein kann, dient zum Verbindungsaufbau und -abbau und zur Steuerung der Koppelvorrichtung 12.

Die Koppelvorrichtung 12 erhält Zellen von der zweiten Auswerteschaltung 15, die genauso arbeitet wie die erste Auswerteschaltung 10 und die mit einer weiteren Wegetabelle 16 verbunden ist. Die Wegetabellen 11 und 16 können auch mit neuen Speicherinhalten über jeweils eine Verbindung von der Steuervorrichtung 13 versorgt werden.

Der Pufferspeicher 8 und die Ausgangspufferanordnung 14 erhalten jeweils Zellen von der Koppelvorrichtung 12 und dienen ebenso wie der Pufferspeicher 9 zur Taktanpassung. Die Ausgangspufferanordnung 14, welche der Steuervorrichtung 13 über eine Verbindung auch die Anzahl der zwischengespeicherten Zellen als Lastinformation mitteilt, leitet empfangene Zellen an eine Funksendevorrichtung 17 weiter, die Zellen in vorgegebene Zeitschlitze eines Zeitmultiplexrahmens einfügt. Eine solche Funksendeeinrichtung moduliert dazu die zu versendenden Daten auf einen ersten Träger, wie dies beispielsweise auch bei dem GSM-System durchgeführt wird. Die Steuervorrichtung 13 steuert die Funksendevorrichtung 17 so, daß nur während eines für die Übertragung von Zellen der Netzwerkschnittstelle 6 bestimmten Zeitschlitzes ein erster Träger mit den Zellen gesendet wird. Steuerungsinformationen für die Lastinformationen erhält die Funksendevorrichtung 17 über eine weitere Leitung von der Steuervorrichtung 13. Die Lastinformationen werden auf einen zweiten Träger aufmoduliert.

Eine Funkempfangsvorrichtung 18 empfängt Daten, die auf einen ersten Träger aufmoduliert sind und in bestimmten Zeitschlitzen eingefügt sind, von einer anderen Netzwerkschnittstelle und auf einen zweiten Träger aufmodulierte Steuerungsinformationen von der Funkstation 5. Die Funkempfangsvorrichtung 18 ist ähnlich aufgebaut wie die bekannten aus dem GSM-System. Die empfangenen Zellen werden nach der Demodulation über einen weiteren Pufferspeicher 19, der auch zur Taktanpassung dient, zur zweiten Auswerteschaltung 15 gegeben. Lastinformationen wrden über eine andere Leitung zur Steuervorrichtung 13 geliefert.

Über die Funksendevorrichtung 17 und die Funkempfangsvorrichtung 18 werden zwei Arten von Nutzzellen übertragen. Einerseits Anwenderzellen, die in ihrem Informationsfeld z. B. Nachrichten oder Daten des Benutzers einer zuvor aufgebauten Verbindung enthalten und andererseits Kontrollzellen, die in ihrem Informationsfeld Steuerungsinformationen für den Verbindungsaufbau und -abbau enthalten. Eine von der zweiten Auswerteschaltung 15 empfangene Anwenderzelle kann einerseits zur Station 7 oder andererseits zur Ausgangspufferanordnung 14 von der Koppelvorrichtung 12 weitergeleitet werden. Eine Anwenderzelle kann in der zweiten Auswerteschaltung 15 auch gelöscht werden. Die Koppelvorrichtung 12 kann auch eine Anwenderzelle zur Station 7 und gleichzeitig zur Ausgangspufferanordnung 14 übermitteln. Eine von der Station 7 erzeugte Anwenderzelle wird nur zur Ausgangspufferanordnung 14 von der Koppelvorrichtung 12 weitergeleitet.

Kontrollzellen, die von der Funkempfangsvorrichtung 18 geliefert werden, können zur Station 7 und/oder zur Ausgangspufferanordnung 14 gegeben werden. Außerdem kann eine Kontrollzelle noch zur Steuervorrichtung 13 weitervermittelt werden. Kontrollzellen, die von der Steuervorrichtung 13 erzeugt werden, können zur Station 7 und/oder zur Ausgangspufferanordnung 14 gelangen. Die von der Station 7 gelieferten Kontrollzellen können bei einem Selbsttest auch wieder zur Station 7 zurückgeführt werden.

In der Koppelvorrichtung 12 wird nach Empfang einer Zelle zuerst das Kopffeld einer Zelle ausgewertet. Ist die im Kopffeld enthaltene Adresse nicht gleich der Adresse der Station 7, so wird sie zur Ausgangspufferanordnung 14 weitergegeben. Entspricht die Adresse im Kopffeld der Zelle der Adresse der Station 7, so wird diese an die Station 7 und/oder an die Steuervorrichtung 13 weitergeleitet. Ebenso ist es denkbar, daß die Zelle auch weiter zur Ausgangspufferanordnung 14 gegeben wird.

Bestimmte Bits im Kopffeld einer Zelle sind für den VCI (virtual channel identifier) reserviert. Diese Angabe enthält nach Normungsvorschlägen den Bestimmungsort einer Zelle und gibt damit eine virtuelle Verbindung an. Des weiteren sind bestimmte Bits im Kopffeld der Zelle für den VPI (virtual path identifier) reserviert. Der VPI enthält Informationen über die Adresse bzw. den Bestimmungsort. Der VCI kann die Angabe über die anwenderbezogene Kennung für eine Verbindung, die Art der Verbindung und die Zellenart enthalten.

Für den VPI sind im Kopffeld der Zelle nach derzeitigen Normungsbestimmungen 8 Bit und für den VCI 16 Bit vorgesehen. Ein Bit des VCI kann für die Angabe verwendet werden, ob es sich um eine Kontrollzelle oder um eine Anwenderzelle handelt. Wenigstens zwei weitere Bits können die Art der Verbindung angeben. Es kann eine Einzel-Verbindung (unicast-connection), eine Mehrfach-Verbindung (multicastconnection) oder eine Verteil-Verbindung (broadcast-connection) vorliegen. Bei einer Einzel-Verbindung oder Ende-zu-Ende-Verbindung besteht eine virtuelle Verbindung eines Anwenders einer ersten Station mit einem Anwender einer zweiten Station. Bei einer Mehrfach-Verbindung oder Punkt-zu-Multipunkt-Verbindung sind mehrere Anwender von Stationen miteinander verbunden. Bei einer Verteil-Verbindung liefert eine Sendestation an alle zwischen der Sendestation und der letzten Empfangsstation liegenden Stationen Zellen mit gleichem Inhalt im Informationsfeld. Die restlichen Bits des VCI können für eine anwenderbezogene Kennung für eine Verbindung dienen. Die so festgelegten VCI und VPI geben eindeutige Verbindungen an. Wie ein Verbindungsaufbau und -abbau bei einem solchen lokalen Netzwerk durchgeführt wird, ist z.B. in der deutschen Patentanmeldung P 43 29 048 beschrieben.

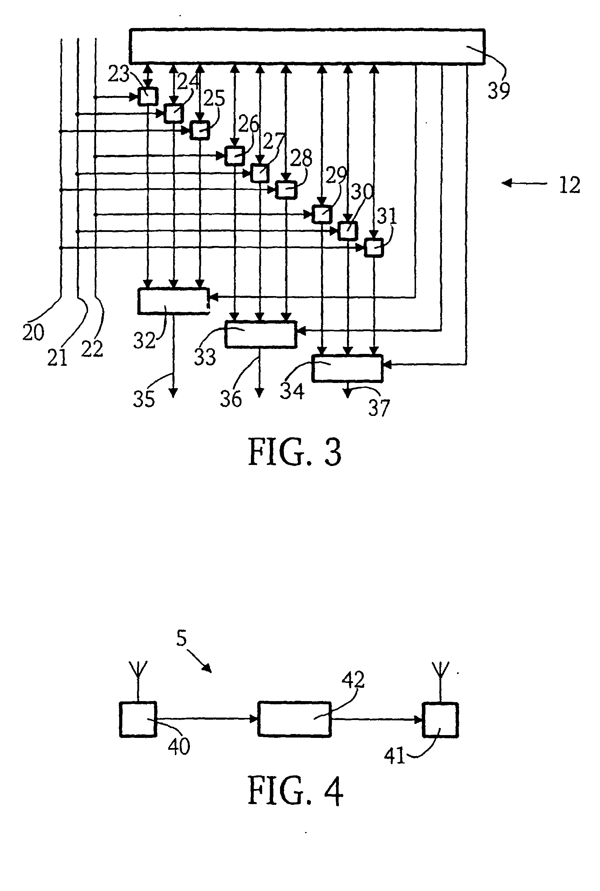

Ein Blockschaltbild eines Ausführungsbeispiel für eine in der Netzwerkschnittstelle 6 enthaltene Koppelvorrichtung 12 zeigt Fig. 3. Eine solche Koppelvorrichtung 12 ist beispielsweise näher in der Veröffentlichung "A Versatile ATM Switch Concept" von U. Killat, W. Kowalk, J. Noll, H.G. Keller, H.J. Reumermann und U. Ziegler, XIII International Switching Symposium, Stockholm, Schweden, 27.5. bis 1.6.1990, Session A6, Paper #4, Procceedings Vol IV, Seiten 127 bis 134, beschrieben. Die Koppelvorrichtung 12 ist über eine Zubringerleitung 20 mit der ersten Auswerteschaltung 10, über eine Zubringerleitung 21 mit der zweiten Auswerteschaltung 15 und über eine dritte Zubringerleitung 22 mit der Steuervorrichtung 13 gekoppelt. Mit jeder Zubringerleitung 20, 21 und 22 sind jeweils drei Zellenfilter 23 bis 31 verbunden. Der Ausgang des mit der Zubringerleitung 22 verbundenen Zellenfilters 23, der Ausgang des mit der Zubringerleitung 21 verbundenen Zellenfilters 24 und der Ausgang des mit der Zubringerleitung 20 verbundenen Zellenfilters 25 sind mit einem Sendepuffer 32 gekoppelt. Die Ausgänge der Zellenfilter 26 bis 28 sind mit einem Sendepuffer 33 und die der Zellenfilter 29 bis 31 mit einem Sendepuffer 34 gekoppelt. Die Zellenfilter 26 und 29 sind mit der Zubringerleitung 22, die Zellenfilter 27 und 30 sind mit der Zubringerleitung 21 und die Zellenfilter 28 und 31 sind mit der Zubringerleitung 20 verbunden. Der Ausgang des Sendepuffers 32 ist über eine Abnehmerleitung 35 mit dem Pufferspeicher 8, der Ausgang des Sendepuffers 33 über eine Abnehmerleitung 36 mit der Ausgangspufferanordnung 14 und der Ausgang des Sendepuffers 34 über eine Abnehmerleitung 37 mit der Steuervorrichtung 13 gekoppelt.

Ein Zellenfilter 23 bis 31 überprüft anhand der Adresse im Kopffeld einer Zelle, ob die eingetroffene Zelle zur zugeordneten Abnehmerleitung 35 bis 37 gelangen soll. In einem Zellenfilter 23 bis 31 findet auch eine Zwischenspeicherung von Zellen statt, bevor sie zum zugeordneten Sendepuffer 32 bis 34 gelangen. Die Zwischenspeicherung der Zellen wird einer Koppelsteuerung 39 mitgeteilt, welche die Auslesereihenfolge aller zwischengespeicherten Zellen in einem Zellenfilter 23 bis 31 festlegt und welche ebenfalls die Auslesung der Zellen aus den Sendepuffern 32 bis 34 steuert.

Die Steuervorrichtung 13 empfängt eine Lastinformation (Anzahl der Zellen) von der Ausgangspufferanordnung 14. Diese Lastinformation wird von der Steuervorrichtung 13 über die Funksendevorrichtung 17 an die Funkstation 5 weitergegeben, welche der Steuervorrichtung 13 nach Empfang aller Lastinformationen von allen Netzwerkschnittstellen die Verteilung der Zeitschlitze bekannt gibt. Die Steuervorrichtung 13 erhält über die Funkempfangsvorrichtung 18 von der Funkstation 5 die Information der Verteilung der Zeitschlitze. Daraus bildet die Steuervorrichtung 13 einen Freigabebefehl für die Funksendevorrichtung 17, die nach Empfang des Freigabebefehls Zellen aus der Ausgangspufferanordnung 14 einliest und auf einen ersten Träger aufmoduliert.

Ein Blockschaltbild der Funkstation 5, die eine Funkempfangsvorrichtung 40, eine Funksendevorrichtung 41 und eine Basissteueranordnung 42 enthält, ist in Fig. 4 gezeigt. Die Basissteueranordnung 42 berechnet aus den empfangenen Lastinformationen aller Netzwerkschnittstellen die Lastverteilung.

Der Algorithmus zur Verteilung der Zeitschlitze für n Netzwerkschnittstellen wird im folgenden beschrieben:

Jede Netzwerkschnittstelle enthält in der Ausgangspufferanordnung 14 $Z_k$ Zellen. Jeder Multiplexrahmen weist M Zeitschlitze auf. Zuerst wird der Anteil $A_1$ an den gesamten Zeitschlitzen für eine erste Netzwerkschnittstelle nach folgender Formel berechnet:

$$A_1 = \frac{Z_1}{\sum_{i=1}^{n} Z_i}$$

Anschließend wird eine gerundete Anzahl $S_1$ von Zeitschlitzen für die erste Netzwerkschnittstelle ermittelt:

$$S_1 = \text{INT}(A_1\, M)$$

INT stellt eine Rundungsoperation dar, die eine Fließkommazahl auf- oder abrundet. Durch diese Rundung muß für die Berechnung der weiteren Zeitschlitze $A_k$, k=2,...,n, ein korrigierter Anteil $B_1$ ermittelt werden:

$$B_1 = \frac{S_1}{M}$$

Die Summe aller anderen Anteile $A_k$, k=2,..,n, ist dann $1-B_1$. Der der zweiten Netzwerkschnittstelle zugeordnete Anteil beträgt:

$$A_2 = (1 - B_1)\, \frac{Z_2}{\sum_{i=2}^{n} Z_i}$$

Die gerundete Anzahl $S_2$ der Zeitschlitze für die zweite Netzwerkschnittstelle ist:

$$S_2 = \text{INT}(A_2\, M)$$

Daraus muß wieder ein korrigierter Anteil $B_2$ berechnet werden:

$$B_2 = \frac{S_2}{M}$$

Auf diese Weise wird auch für die anderen Netzwerkschnittstellen der jeweilige Zeitschlitzanteil ermittelt. Für eine Netzwerkschnittstelle k ergeben sich dann die folgenden Formeln:

$$A_k = \left(1 - \sum_{i=1}^{k-1} B_i\right) \frac{Z_k}{\sum_{i=k}^{n} Z_i} \quad,$$

$$S_k = \mathrm{INT}(A_k\, M)$$

$$B_k = \frac{S_k}{M}$$

Die Basissteueranordnung 42 berechnet die Verteilung der Zeitschlitze für jeden neuen Zeitmultiplexrahmen.

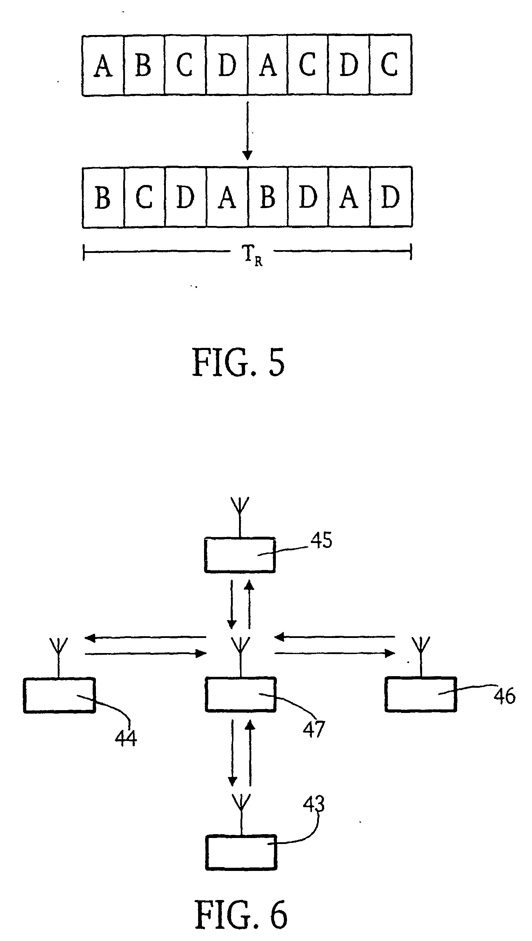

Ein Beispiel für die Verteilung von 8 Zeitschlitzen eines Zeitmultiplexrahmens $T_R$ zeigt Fig. 5. Eine Netzwerkschnittstelle A sendet Zellen an eine Netzwerkschnittstelle B, die Netzwerkschnittstelle B sendet Zellen an eine Netzwerkschnittstelle C, die Netzwerkschnittstelle C sendet Zellen an eine Netzwerkschnittstelle D und die Netzwerkschnittstelle D sendet Zellen an die Netzwerkschnittstelle A. In der Ausgangspufferanordnung 14 der Netzwerkschnittstelle A sind vier Zellen, in der Ausgangspufferanordnung 14 der Netzwerkschnittstelle B sind zwei Zellen, in der Ausgangspufferanordnung 14 der Netzwerkschnittstelle C sind acht Zellen und in der Ausgangspufferanordnung 14 der Netzwerkschnittstelle D sechs Zellen zwischengespeichert. Die Basissteueranordnung 42 weist der Netzwerkschnittstelle A zwei Zeitschlitze, der Netzwerkschnittstelle B einen Zeitschlitz, der Netzwerkschnittstelle C drei Zeitschlitze und der Netzwerkschnittstelle D zwei Zeitschlitze zu. Die Verteilung der Zeitschlitze erfolgt bei diesem Beispiel gleichmäßig über den Zeitmultiplexrahmen $T_R$.

In Fig. 6 ist ein weiteres Ausführungsbeispiel für ein lokales Netzwerk gezeigt. Dieses enthält vier Vorrichtungen 43 bis 46 mit einer Netzwerkschnittstelle und einer zugeordneten Station. Eine Funkstation 47 dient hierbei nicht nur zur Berechnung der Zeitschlitzverteilung sondern auch als Brückenglied. Zellen werden dabei nicht direkt von Netzwerkschnittstelle zu Netzwerkschnittstelle übertragen sondern über die Funkstation 47. Eine solche Ausführungsform kann viele Komponenten eines GSM-Systems verwenden.

**Patentansprüche**

1. Lokales Netzwerk mit mehreren Netzwerkschnittstellen (6), die jeweils mit einer Station (7) gekoppelt sind und die untereinander zum Austausch von Daten vorgesehen sind, und mit einem Verteilmittel (5), das

   - zum Austausch von Daten mit den Netzwerkschnittstellen (6),
   - zum Empfang von Lastinformationen der Netzwerkschnittstellen (6) und
   - in Abhängigkeit der Lastinformationen zur Ermittlung vorgesehen ist, welche der mehreren Kanalkapazitäten den Netzwerkschnittstellen zur Verfügung gestellt wird, und zur Verteilung der Kanäle für den Datenaustausch zwischen den Netzwerkschnittstellen (6) vorgesehen ist.

2. Lokales Netzwerk nach Anspruch 1,
   **dadurch gekennzeichnet,**
   **daß** die Netzwerkschnittstellen (6) jeweils zum Austausch von Daten über Funkübertragungswege vorgesehen sind und
   **daß** das Verteilmittel als Funkstation (5) ausgebildet ist, die zum Austausch von Daten mit den Netzwerkschnittstellen (6) über Funkübertragungswege und zur Sendung der Verteilung von Funkkanälen für den Datenaustausch zwischen den Netzwerkschnittstellen (6) vorgesehen ist.

3. Lokales Netzwerk nach Anspruch 2,
   **dadurch gekennzeichnet,**
   **daß** eine Netzwerkschnittstelle (6)

   - zur Sendung und zum Empfang von Daten enthaltenen Paketen vorgesehen ist,
   - eine Ausgangspufferanordnung (14) zur Zwischenspeicherung der zu sendenden Pakete enthält und

- zur Sendung von Lastinformationen über den Inhalt der Ausgangspufferanordnung (14) an die Funkstation (5) vorgesehen ist.

4. Lokales Netzwerk nach Anspruch 3,
**dadurch gekennzeichnet,**
**daß** eine Netzwerkschnittstelle (6)

- zur Sendung und zum Empfang von Daten enthaltenen, nach dem asynchronen Transfermodus, ATM, gebildeten Zellen und
- zur Sendung von Lastinformationen über die Anzahl der zu einer anderen Netzwerkschnittstelle (6) zu übertragenen Zellen vorgesehen ist.

5. Lokales Netzwerk nach Anspruch 4,
**dadurch gekennzeichnet,**
**daß** die Funkstation (5) zur Zuweisung von Zeitschlitzen eines Zeitmultiplexrahmens für jede Netzwerkschnittstelle (6) in Abhängigkeit von der Anzahl der zu einer anderen Netzwerkschnittstelle (6) zu übertragenen Zellen in der zugeordneten Ausgangspufferanordnung (14) vorgesehen ist.

6. Lokales Netzwerk nach Anspruch 5,
**dadurch gekennzeichnet,**
**daß** eine Netzwerkschnittstelle (6)

- eine Steuervorrichtung (13) zur Steuerung der Ausgangspufferanordnung (14) und zur Bestimmung der Anzahl der Zellen in der Ausgangspufferanordnung (14),
- eine Funksendevorrichtung (17) zur Sendung der von der Steuervorrichtung (13) enthaltenen Lastinformationen an die Funkstation (5) und
- eine Funkempfangsvorrichtung (18) zur Weiterleitung der von der Funkstation (5) empfangenen Daten an die Steuervorrichtung (13) enthält und

**daß** die Steuervorrichtung (13) zur Erzeugung eines Freigabebefehls für die Funksendevorrichtung (17) vorgesehen ist, so daß nur während eines zugewiesenen Zeitschlitzes die Funksendevorrichtung (17) zur Sendung von von der Ausgangspufferanordnung (14) abgegebenen Zellen dient.

7. Lokales Netzwerk nach Anspruch 6,
**dadurch gekennzeichnet,**
**daß** eine Netzwerkschnittstelle (6) eine Koppelvorrichtung (12) enthält, die zur Weiterleitung der von der Funkempfangsvorrichtung (18) empfangenen Zellen, einer zugeordneten Station (7) abgegebenen Zellen oder der Steuervorrichtung (13) abgegebenen Zellen zu der zugeordneten Station (7), der Steuervorrichtung (13) und/oder der Funksendevorrichtung (17) vorgesehen ist.

8. Lokales Netzwerk nach Anspruch 7,
**dadurch gekennzeichnet,**
**daß** die Koppelvorrichtung (12) über Zubringerleitungen (20 bis 22) mit einem Ausgang der Station (7), einem Ausgang der Steuervorrichtung (13) und der Funkempfangsvorrichtung (18) und über Abnehmerleitungen (35 bis 37) mit einem Eingang der Station (7), einem Eingang der Steuervorrichtung (13) und der Funksendevorrichtung (17) gekoppelt ist,
**daß** jede Abnehmerleitung (35 bis 37) mit einem Sendepuffer (32 bis 34) gekoppelt ist,
**daß** jedes Sendepuffer (32 bis 34) über jeweils ein Zellenfilter (23 bis 31) mit einer Zubringerleitung (20 bis 22) gekoppelt ist,
**daß** ein Zellenfilter (23 bis 31) zur Überprüfung der Adresse einer Zelle und zur Weiterleitung von Zellen mit korrekter Adresse an den zugeordneten Sendepuffer (32 bis 34) vorgesehen ist und
**daß** eine Koppelsteuerung (39) zum Austausch von Meldungen über die an ein Sendepuffer (32 bis 34) weitergeleitete Zelle mit einem Zellenfilter (23 bis 31) und zur Freigabe der Sendepuffer (32 bis 34) vorgesehen ist.

9. Lokales Netzwerk nach einem der Ansprüche 5 bis 8,
**dadurch gekennzeichnet,**
**daß** die Funkstation (5) eine Basissteueranordnung (42) enthält, die in jedem Zeitmultiplexrahmen

- zum Empfang der Anzahl $Z_k$ der in einer Ausgangspufferanordnung (14) einer Netzwerkschnittstelle (6) zwischengespeicherten, für die Zuführung zu einer anderen Netzwerkschnittstelle (6) vorgesehenen Zellen,
- zur Berechnung der Anzahl $S_k$ von Zeitschlitzen eines Zeitmultiplexrahmens für eine Netzwerkschnittstelle (6) mit den Formeln:

$$S_k = INT(A_k\ M)$$

$$A_k = \begin{cases} \dfrac{Z_k}{\sum\limits_{i=1}^{n} Z_i} & \text{wenn } k=1 \\[4ex] \left(1-\sum\limits_{i=1}^{k-1} B_i\right)\dfrac{Z_k}{\sum\limits_{i=k}^{n} Z_i} & \text{sonst} \end{cases}$$

$$B_i = \dfrac{S_i}{M}\ ,$$

wobei INT eine Rundungsoperation, M die Anzahl der Zeitschlitze eines Zeitmultiplexrahmens, n die Anzahl der Netzwerkschnittstellen (6), k=1,2,...,n und i=1,2,...,n-1 ist, und
- zur Verteilung der Zeitschlitze für jede Netzwerkschnittstelle (6) vorgesehen ist.

10. Lokales Netzwerk nach einem der Ansprüche 2 bis 9,
**dadurch gekennzeichnet,**
**daß** die Funkstation (47) jeweils als Brückenglied zur Weiterleitung der von einer Netzwerkschnittstelle (6) empfangenen Daten zu einer anderen Netzwerkschnittstelle (6) vorgesehen ist.

11. Funkstation (5) für ein lokales Netzwerk mit mehreren, jeweils mit einer Station (7) gekoppelten Netzwerkschnittstellen (6) zum Austausch von Daten über Funkübertragungswege, die

- zum Austausch von Daten mit den Netzwerkschnittstellen (6) über Funkübertragungswege,
- zum Empfang von Lastinformationen der Netzwerkschnittstellen (6) und
- in Abhängigkeit der Lastinformationen zur Ermittlung vorgesehen ist, welche der mehreren Kanalkapazitäten den Netzwerkschnittstellen zur Verfügung gestellt wird, und zur Verteilung der Kanäle für den Datenaustausch zwischen den Netzwerkschnittstellen (6) vorgesehen ist.

## Claims

1. A local network comprising a plurality of network interfaces (6) each coupled to a station (7) and provided for mutually exchanging data, and a distribution means (5) provided for

- exchanging data with the network interfaces (6),
- receiving load information of the network interfaces (6), and
- determining, in response to the load information, which of the plurality of channel capacities is made available for the network interfaces, and is provided for the channel distribution for the exchange of data between the network interfaces (6).

2. A local network as claimed in claim 1, **characterized in that** each network interface (6) is provided for exchanging data via radio transmission paths and **in that** the distribution means is arranged as a radio station (5), which station is used for exchanging data with the network interfaces (6) via radio transmission paths and for transmitting the radio channel distribution for the exchange of data between the network interfaces (6).

3. A local network as claimed in claim 2, **characterized in that** a network interface (6)

   - is provided for transmitting and receiving packets containing data,
   - includes an output buffer means (14) for buffering the packets to be sent, and
   - is provided for transmitting load information about the contents of the output buffer means (14) to the radio station (5).

4. A local network as claimed in claim 3, **characterized in that** a network interface (6) is provided for

   - transmitting and receiving cells formed in accordance with the asynchronous transfer mode, ATM and containing data, and
   - transmitting load information about the number of cells to be transmitted to another network interface (6).

5. A local network as claimed in claim 4, **characterized in that** the radio station (5) is provided for assigning time slots of a time-division multiplex frame for each network interface (6) in response to the number of cells in the assigned output buffer means (14) to be transmitted to another network interface (6).

6. A local network as claimed in claim 5, **characterized in that** a network interface (6) comprises

   - a controller (13) for controlling the output buffer means (14) and for determining the number of cells in the output buffer means (14),
   - a radio transmitter (17) for transmitting the load information available at the controller (13) to the radio station (5), and
   - a radio receiver (18) for conveying the data received from the radio station (5) to the controller (13), and

   **in that** the controller (13) is provided for producing an enable command for the radio transmitter (17), so that only during an assigned time slot the radio transmitter (17) is used for transmitting cells delivered by the output buffer means (14).

7. A local network as claimed in claim 6, **characterized in that** a network interface (6) comprises a switching device (12) which is provided for routing the cells received by the radio receiver (18), cells supplied to an assigned station (7) or cells supplied to the controller (13), to the assigned station (7), to the controller (13) and/or to the radio transmitter (17).

8. A local network as claimed in claim 7, **characterized in that** the switching device (12) is coupled via auxiliary lines (20 to 22) to an output of the station (7), an output of the controller (13) and of the radio receiver (18) and via trunk lines (35 to 37) to an input of the station (7), an input of the controller (13) and of the radio transmitter (17),
   **in that** each trunk line (35 to 37) is coupled to a transmission buffer (32 to 34),
   **in that** each transmission buffer (32 to 34) is coupled via its cell filter (23 to 31) to an auxiliary line (20 to 22),
   **in that** a cell filter (23 to 31) is arranged to verify the address of a cell and to convey cells carrying a correct address to the assigned transmission buffer (32 to 34), and
   **in that** a switch controller (39) is provided for exchanging messages about the cells conveyed to a transmission buffer (32 to 34) with a cell filter (23 to 31) and for enabling the transmission buffer (32 to 34).

9. A local network as claimed in any one of claims 5 to 8, **characterized in that** the radio station (5) comprises a base controller (42) which in each time-division multiplex frame is provided for

   - receiving the number $Z_k$ of cells buffered in an output buffer means (14) of one network interface (6) and intended to be transferred to another network interface (6),
   - computing the number $S_k$ of time slots of a time-division multiplex frame for a network interface (6) utilizing the formulas:

$$S_k = INT(A_k M)$$

$$A_k = \begin{cases} \dfrac{Z_k}{\sum\limits_{i=1}^{n} Z_i} & \text{if } k=1 \\[4ex] \left(1 - \sum\limits_{i=1}^{k-1} B_i\right) \dfrac{Z_k}{\sum\limits_{i=k}^{n} Z_i} & \text{otherwise} \end{cases}$$

$$B_i = \frac{S_i}{M}$$

where INT is a rounding operation, M is the number of time slots of a time-division multiplex frame, n is the number of network interfaces (6), k=1, 2, ..., n and i=1, 2, ..., n-1, and
- for distributing the time slots for each network interface (6).

**10.** A local network as claimed in claims 2 to 9, **characterized in that** the radio station (47) is arranged as a bridging element for conveying the data received from one network interface (6) to another network interface (6).

**11.** A radio station (5) for a local network comprising a plurality of network interfaces (6) each coupled to a station (7), which interfaces are provided for exchanging data via radio transmission paths, which radio station is provided for

- exchanging data with the network interfaces (6) via radio transmission paths,
- receiving load information of the network interfaces (6), and
- determining, in response to the load information, which of the plurality of channel capacities is made available for the network interfaces, and is provided for the channel distribution for the exchange of data between the network interfaces (6).

**Revendications**

**1.** Réseau local avec plusieurs interfaces de réseau (6) qui sont respectivement couplées avec une station (7) et qui sont prévues entre elles pour l'échange de données et avec un répartiteur (5) qui est prévu:

- pour l'échange de données avec les interfaces de réseau (6),
- pour la réception d'informations de charge des interfaces de réseau (6) et
- en fonction des informations de charge pour la détermination de celle des plusieurs capacités de canal qui est mise à la disposition des interfaces de réseau et sert à la répartition des canaux pour l'échange de données entre les interfaces de réseau (6).

**2.** Réseau local selon la revendication 1, **caractérisé en ce que** les interfaces de réseau (6) sont respectivement prévues pour l'échange de données par l'intermédiaire de voies de transmission radio et que le répartiteur est conçu comme une station radio (5) qui est prévue pour l'échange de données avec les interfaces de réseau (6) sur des voies de transmission radio et pour la transmission de la répartition des canaux radio pour l'échange de données entre les interfaces de réseau (6).

**3.** Réseau local selon la revendication 2, **caractérisé en ce qu'**une interface de réseau (6)

- est prévue pour le transmission et la réception de paquets contenant des données;
- contient un dispositif tampon de sortie (14) pour la sauvegarde intermédiaire des paquets à transmettre et
- est prévue pour la transmission d'informations de charge sur le contenu du dispositif tampon de sortie (14) à la station radio (5).

**4.** Réseau local selon la revendication 3, **caractérisé en ce qu'**une interface de réseau (6) est prévue

- pour la transmission et la réception de cellules contenant des données et formées selon le mode de transfert asynchrone, ATM, et
- pour la transmission d'informations de charge sur le nombre des cellules à transmettre à une autre interface de réseau (6).

**5.** Réseau local selon la revendication 4, **caractérisé en ce que** la station radio (5) est prévue pour l'attribution de fentes temporelles d'un cadre de multiplexage temporel pour chaque interface de réseau (6) en fonction du nombre des cellules à transmettre à une autre interface de réseau (6) dans le dispositif tampon de sortie (14) attribué.

**6.** Réseau local selon la revendication 5, **caractérisé en ce qu'**une interface de réseau (6) contient:

- un dispositif de commande (13) pour la commande du dispositif tampon de sortie (14) et pour la détermination du nombre des cellules dans le dispositif tampon de sortie (14),
- un dispositif de transmission radio (17) pour la transmission des informations de charge contenues par le dispositif de commande (13) à la station radio (5) et
- un dispositif de réception radio (18) pour la transmission des données reçues par la station radio (5) au dispositif de commande (13) et

que le dispositif de commande (13) est prévu pour la production d'une commande de libération pour le dispositif de transmission radio (17) de telle sorte que le dispositif de transmission radio (15) serve seulement à la transmission de cellules délivrées par le dispositif tampon de sortie (14) pendant une fente temporelle attribuée.

**7.** Réseau local selon la revendication 6, **caractérisé en ce qu'**une interface de réseau (6) contient un dispositif de couplage (12) qui est prévu pour la transmission des cellules reçues par le dispositif de réception radio (18), des cellules délivrées à une station affectée (7) ou des cellules délivrées aux dispositifs de commande (13) vers la station attribuée (7), le dispositif de commande (13) et/ou le dispositif de transmission radio (17).

**8.** Réseau local selon la revendication 7, **caractérisé en ce que** le dispositif de couplage (12) est couplé par l'intermédiaire de lignes d'alimentation (20 à 22) à une sortie de la station (7), à une sortie du dispositif de commande (13) et au dispositif de réception radio (18) et par l'intermédiaire de lignes de sortie (35, 37) à une entrée de la station (7), à une entrée du dispositif de commande (13) et au dispositif de transmission radio (17), que chaque ligne de sortie (35 à 37) est couplée à une mémoire de transmission (32 à 34), que chaque tampon de transmission (32 à 34) est respectivement couplé par l'intermédiaire d'un filtre de cellules (23 à 31) à une ligne d'alimentation (20 à 22);
qu'un filtre de cellules (23 à 31) est prévu pour le contrôle de l'adresse d'une cellule et pour la transmission de cellules avec une adresse correcte au tampon de transmission attribué (32 à 34) et
qu'une commande de couplage (39) est prévue pour l'échange d'indications sur la cellule transmise à un tampon de transmission (32 à 34) avec un filtre de cellules (23 à 31) et pour la libération du tampon de transmission (32 à 34).

**9.** Réseau local selon l'une des revendications 5 à 8, **caractérisé en ce que** la station radio (5) contient un dispositif de commande de base (42) qui est prévu dans chaque cadre de multiplexage temporel:

- pour la réception du nombre $Z_k$ des cellules prévues pour l'alimentation vers une autre interface de réseau (6) et enregistrées à titre intermédiaire dans un dispositif tampon de sortie (14) d'une interface de réseau (6) ,
- pour le calcul du nombre $S_k$ de fentes temporelles d'un cadre de multiplexage temporel pour une interface de réseau (6) avec les formules :

$$S_k = INT(A_k M)$$

lorsque $k = 1$

$$A_k = \begin{cases} \dfrac{Z_k}{\displaystyle\sum_{i=1}^{n} Z_i} \\[2em] \left(1 - \displaystyle\sum_{i-1}^{k-1} B_i\right) \dfrac{Z_k}{\displaystyle\sum_{i=k}^{n} Z_i} \end{cases}$$

sinon

$$B_i = \frac{s_i}{M}$$

INT étant une opération d'arrondi, M le nombre des fentes temporelles d'un cadre de multiplexage temporel, n le nombre des interfaces de réseau (6), k = 1,2, ..., n et i = 1, 2, ..., n-1 et

- pour la répartition des fentes temporelles pour chaque interface de réseau (6).

10. Réseau local selon l'une des revendications 2 à 9, **caractérisé en ce que** la station radio (47) est respectivement prévue comme organe de pont pour la transmission des données reçues par une interface de réseau (6) vers une autre interface de réseau (6).

11. Station radio (5) pour un réseau local avec plusieurs interfaces de réseau (6) couplées respectivement à une station (7) pour l'échange de données par l'intermédiaire de voies de transmission radio qui est prévu

- pour l'échange de données avec les interfaces de réseau (6) par l'intermédiaire de voies de transmission radio,
- pour la réception d'informations de charge des interfaces de réseau (6) et
- en fonction des informations de charge pour la détermination de celle des plusieurs capacités de canal qui est mise à la disposition des interfaces de réseau et sert à la répartition des canaux pour l'échange de données entre les interfaces de réseau (6).

FIG. 1

FIG. 2

FIG. 3

FIG. 4

| A | B | C | D | A | C | D | C |
|---|---|---|---|---|---|---|---|

| B | C | D | A | B | D | A | D |
|---|---|---|---|---|---|---|---|

$\longleftarrow T_R \longrightarrow$

# FIG. 5

# FIG. 6